# FASCICULE DE BREVET EUROPEEN

(11) **EP 4 301 658 B1**
(45) Date de publication et mention de la délivrance du brevet: **16.07.2025**
(21) Numéro de dépôt: 22709690.6
(22) Date de dépôt: 01.03.2022
(51) Int. Cl.: B64U 10/20, B64U 30/10, B64U 30/297

(54) **DRONE HYBRIDE À DÉCOLLAGE ET ATTERRISSAGE VERTICAL ADAPTÉ AU VOL EN CONDITIONS VENTEUSES**
HYBRIDE SENKRECHT STARTENDE UND LANDENDE DROHNE, DIE FÜR DEN FLUG UNTER WINDIGEN BEDINGUNGEN GEEIGNET IST
HYBRID DRONE WITH VERTICAL TAKE-OFF AND LANDING ADAPTED TO FLIGHT IN WINDY CONDITIONS

(30) Priorité: 01.03.2021 FR 2101971
(43) Date de publication de la demande: 10.01.2024
(73) Titulaire: Tidav, 31700 Blagnac (FR)
(72) Inventeur: VALERO, Philippe, 31400 TOULOUSE (FR); JOURDON, Vivien, 31000 TOULOUSE (FR); LEFORT, Cédric, 31700 BLAGNAC (FR)
(74) Mandataire: Bringer IP
(86) Numéro de dépôt international: PCT/EP2022/055064
(87) Numéro de publication internationale: WO 2022/184672

(56) Documents cités:
- WO-A1-2016/092102
- WO-A1-2016/120833
- WO-A1-2019/172804
- CN-A- 109 733 603
- FR-A1- 3 051 440
- US-A1- 2011 315 809
- US-A1- 2017 240 273

## Description

### Domaine technique de l'invention

L'invention concerne un drone hybride à décollage et atterrissage vertical adapté au vol en conditions venteuses. En particulier, l'invention concerne un drone capable de vol stationnaire tel un hélicoptère et de vol à grande vitesse grâce à une voilure fixe tel un avion, possédant des moyens de contrôle pour réduire l'influence du vent sur le vol, en particulier en vol stationnaire.

### Arrière-plan technologique

Les drones, aussi appelés aéronefs sans équipage, ou véhicule aérien sans humain à bord ou UAV pour *Unmanned Aerial Vehicle* en anglais, sont des aéronefs présentant des caractéristiques différentes selon les applications auxquelles ils sont destinés. En particulier, les drones sont par exemple des drones multirotors destinés aux vols verticaux tel un hélicoptère, des drones à voilure fixes permettant des vols à grande vitesse pour des distances plus importantes tel un avion ou des drones hybrides permettant les deux types de vols.

Ces drones hybrides peuvent faire partie de la catégorie des drones à décollage et atterrissage vertical, appartenant aux aéronefs à décollage et atterrissage vertical (ADAV ou VTOL pour *Vertical Take-Off and Landing* en anglais). Généralement, ces drones VTOL sont formés de la combinaison d'un multirotor classique auquel on ajoute des voilures fixes et un moyen de propulsion qui peut être indépendant ou fourni par les rotors.

Ces drones hybrides présentent plusieurs inconvénients.

Le problème principal que vise à résoudre l'invention est la faible résistance au vent des drones VTOL de l'art antérieur, qui est largement due aux méthodes de déplacement en phase de vol vertical où, comme pour un hélicoptère, les déplacements latéraux d'une part et les déplacements vers l'avant ou vers l'arrière nécessitent respectivement un roulis ou un tangage de l'aéronef de sorte à incliner la portance du drone dans la direction souhaitée. Dans des conditions venteuses, en particulier avec un vent supérieur à 8m/s, la géométrie du drone et en particulier la présence de voilures fixes entraînent d'une part l'augmentation de la prise au vent du fait d'une grande surface exposée face ou dos au vent, d'autre part la génération de trainées et d'instabilités aérodynamique et notamment la possibilité d'un écoulement turbulent.

D'autres problématiques sont présentes dans les drones VTOL de l'art antérieur. D'une part, la vitesse du drone est particulièrement lente en vol vertical et rapide en vol de type avion, sans possibilité d'évolution à des vitesses intermédiaire du fait d'une transition marquée entre les deux modes de vol. Cette problématique limite les possibilités de décoller ou atterrir en présence de vent à différentes vitesses. En outre, les drones VTOL présentent généralement un grand nombre de composants (souvent au moins quatre rotors) pour permettre l'hybridation, ce qui réduit fortement les performances et augmente la consommation d'énergie et le poids du drone. US 2011/315809, WO 2019/172804 divulguent des drones de l'état de la technique.

Les inventeurs ont ainsi cherché à améliorer les drones existant avec comme critère principal une résistance accrue au vent.

### Objectifs de l'invention

L'invention vise à fournir un drone hybride présentant une grande résistance aux conditions venteuses.

L'invention vise à fournir, dans au moins un mode de réalisation, un drone hybride permettant un contrôle passif de l'assiette et de l'inclinaison pour réduire la surface exposée au vent.

L'invention vise à fournir, dans au moins un mode de réalisation, un drone hybride pouvant réaliser des mouvements précis à différentes vitesses sous différentes conditions de vent.

L'invention vise à fournir, dans au moins un mode de réalisation, un drone pouvant décoller et atterrir verticalement même en présence de vent.

### Exposé de l'invention

Pour ce faire, l'invention concerne un drone hybride à décollage et atterrissage vertical comprenant au moins deux voilures fixes sensiblement parallèles comprenant chacune au moins deux ailerons répartis de part et d'autre d'un axe de roulis du drone et contrôlés individuellement, caractérisé en ce qu'il comprend au moins deux rotors contre-rotatifs à pas collectif et à plateau cyclique agencés entre deux voilures de part et d'autre de l'axe de roulis, contrôlés individuellement et articulés de sorte à permettre un basculement indépendant de chaque rotor selon un axe de basculement sensiblement parallèle à l'axe de tangage du drone, l'axe de rotation des pales de chaque rotor étant sensiblement perpendiculaire audit axe de basculement.

Un drone hybride selon l'invention permet donc un déplacement contrôlé dans des conditions météorologiques venteuses difficiles, grâce à la possibilité de se déplacer dans toutes les directions sans exposer de surface au vent et en restant sensiblement horizontal lors des déplacements en translation dans les modes de vol qui le nécessite, notamment à basse et moyenne vitesse.

Dans toute la demande, le drone est défini selon un repère classique d'un aéronef par les axes de roulis, de tangage et de lacet, et les déplacements selon ces axes sont appelés respectivement :
- déplacement longitudinal pour un déplacement vers l'avant ou vers l'arrière selon l'axe de roulis,
- déplacement latéral pour un déplacement vers la gauche ou vers la droite selon l'axe de tangage, et
- déplacement vertical pour un déplacement vers le haut ou vers le bas selon l'axe de lacet.

Un rotor, également appelé voilure tournante, est de façon connue composé d'un ensemble de pales dont la rotation à grande vitesse permet de former une portance. Dans le drone selon l'invention, chaque rotor possède des caractéristiques proches d'un rotor d'hélicoptère classique, en particulier la présence d'un pas collectif permettant de modifier la portance de chaque rotor par inclinaison de toutes les pales au même angle d'inclinaison, et la présence d'un plateau cyclique permettant de modifier la portance de chaque rotor par inclinaison variable de chaque pale selon sa position autour du rotor.

Les deux voilures fixes sont agencées en tandem autour d'au moins deux rotors contre-rotatifs, c'est-à-dire de sens de rotation contraire. Les voilures fixes permettent ainsi en outre la protection des rotors.

C'est en particulier la présence du plateau cyclique sur chaque rotor, associé au contrôle indépendant de chaque plateau cyclique et à la présence d'au moins deux rotors contre-rotatifs qui permettent d'effectuer des déplacements maîtrisés. Lorsque la force du vent est importante, c'est-à-dire lorsque la vitesse relative du drone par rapport à l'air est importante, la présence des voilures fixes permet d'ajouter de la portance et du contrôle en tangage et en roulis grâce à la présence des ailerons commandables. Cette maîtrise de la stabilité du drone permet d'une part une intervention du drone dans des zones exposées au vent, par exemple en haute mer sur des éoliennes au large (*offshore*) ou plateformes pétrolières, à des vitesses par rapport au sol qui peuvent être nulles. En particulier, le drone peut opérer un décollage et un atterrissage vertical sur des sols fixes ou mouvants (par exemple sur un véhicule terrestre, aérien ou nautique), et en absence ou en présence de vent.

Le drone hybride selon l'invention se différencie donc des drones de l'art antérieur qui nécessitent de modifier leur assiette ou leur inclinaison pour effectuer des déplacements longitudinaux ou latéraux et présentent ainsi une surface exposée au vent, ce qui ne permet pas des déplacements maîtrisés dans des zones exposées au vent ou un décollage et un atterrissage vertical sur des sols mouvants.

Le drone hybride peut comprendre deux rotors ou plus de deux rotors, de préférence un nombre pair de rotors répartis symétriquement autour de l'axe de roulis pour un meilleur équilibrage.

Le drone est compatible avec tout type d'intervention selon ses dimensions et la puissance des rotors, en particulier :
- transport de charge ou de personnes,
- largage de charge utile en vol,
- prise d'images ou inspection,
- intervention de dépannage ou de maintenance,
- etc.

Avantageusement et selon l'invention, le drone comprend un système de contrôle de chaque aileron et de chaque rotor indépendamment, comprenant :
- un module de commande active des déplacements configuré pour commander chaque aileron et/ou chaque rotor en fonction d'une commande de vol,
- un module de correction passive d'assiette et d'inclinaison configuré pour, dans au moins un mode de vol du drone, commander chaque aileron et/ou chaque rotors de façon à conserver une assiette et une inclinaison sensiblement nulle du drone.

Selon cet aspect de l'invention, le contrôle passif d'assiette et d'inclinaison est destiné à maintenir en permanence le drone en position horizontale (assiette et inclinaison sensiblement nulle), quelles que soient les commandes actives de déplacement reçues. Le contrôle passif, ou asservissement, forme ainsi un contrôle en boucle fermée de l'assiette et de l'inclinaison du drone. Les commandes actives, en boucle ouverte, se superposent au contrôle passif.

Ce contrôle passif permet de limiter en permanence l'exposition des surfaces du drone au vent qui présente généralement une composante principale horizontale en l'absence de relief. Ainsi, l'impact de la présence de vent est fortement réduit pour les déplacements du drone, qui peut ainsi se mouvoir en translation tout en restant plat, c'est-à-dire sensiblement horizontal.

Le contrôle passif permet également un transport de charge stable, en particulier un transport de personnes stabilisé avec un confort amélioré.

Un module peut par exemple consister en un dispositif informatique tel qu'un ordinateur, d'un ensemble de dispositifs informatiques, d'un composant électronique ou d'un ensemble de composants électroniques, ou par exemple d'un programme informatique, d'un ensemble de programmes informatiques, d'une librairie d'un programme informatique ou d'une fonction d'un programme informatique exécuté par un dispositif informatique tel qu'un ordinateur, un ensemble de dispositifs informatiques, un composant électronique ou un ensemble de composants électroniques.

Avantageusement et selon l'invention, le module de correction passive est configuré pour commander chaque aileron et/ou chaque rotor de façon à ce que l'axe de roulis du drone soit sensiblement parallèle à la direction du vent.

Selon cet aspect de l'invention, le drone se place automatiquement face au vent afin de réduire les perturbations engendrées par le vent et pour faciliter les déplacements du drone en présence de vent.

Avantageusement et selon l'invention, le module de correction passive est configuré pour, dans au moins un mode de vol du drone :
- un contrôle du tangage du drone par contrôle du plateau cyclique de chaque rotor de sorte à ce que, pour chaque rotor, la portance à l'arrière du rotor et la portance à l'avant du rotor soit différente,
- un contrôle du roulis du drone par contrôle du pas collectif de chaque rotor de sorte à ce que chaque rotor ait une portance moyenne différente d'un autre rotor agencé de l'autre côté de l'axe de roulis,
- un contrôle du lacet du drone par contrôle du basculement de chaque rotor de part et d'autre de l'axe de roulis dans des directions opposées.

Selon cet aspect de l'invention, le contrôle passif s'effectue par contrôle du plateau cyclique, du pas collectif et/ou du basculement de chaque rotor. Ces mécanismes de contrôle passifs peuvent se cumuler pour répondre à plusieurs contraintes simultanées, lors d'une correction simultanée de tangage et de roulis pour maintenir le drone sensiblement horizontal par exemple. Ces contrôles sont de préférence spécifiques à un mode de vol dit vertical et un mode de vol dit intermédiaire, lorsque la vitesse de déplacement par rapport à l'air est comprise entre zéro et un deuxième seuil prédéterminé.

Avantageusement et selon l'invention, le module de correction passive est configuré pour, lorsque la vitesse du drone par rapport à l'air est comprise entre un premier seuil prédéterminé et un deuxième seuil prédéterminé, les contrôles supplémentaires suivant :
- un contrôle supplémentaire du tangage du drone par contrôle de chaque aileron de sorte à ce que la portance des ailerons à l'avant de l'axe de tangage du drone soit différente de la portance des ailerons à l'arrière de l'axe de tangage du drone,
- un contrôle supplémentaire du roulis du drone par contrôle de chaque aileron de sorte à ce que la portance des ailerons d'un côté de l'axe de roulis soit différente de la portance des ailerons de l'autre côté de l'axe de roulis.

Selon cet aspect de l'invention, ces contrôles sont spécifiques à un mode de vol dit intermédiaire, en présence de vent ou plus généralement lorsque la vitesse de déplacement par rapport à l'air est comprise entre un premier seuil prédéterminé et un deuxième seuil prédéterminé, durant lequel les voilures fixes et les ailerons ont un impact sur le contrôle du drone.

En particulier, les ailerons sont contrôlés pour modifier la portance de chaque voilure fixe de sorte à offrir des contrôles supplémentaires aux contrôles des rotors.

Avantageusement et selon l'invention, le module de commande active est configuré pour, dans au moins un mode de vol du drone :
- un contrôle de translation longitudinal du drone par contrôle du basculement simultané de tous les rotors dans la même direction,
- un contrôle de translation latérale du drone par contrôle du plateau cyclique de chaque rotor de sorte à ce que, pour chaque rotor, la portance à gauche du rotor et la portance à droite du rotor soit différente,
- un contrôle de translation verticale du drone par contrôle du pas collectif de chaque rotor de sorte à ce que tous les rotors aient la même portance.

Selon cet aspect de l'invention, la commande active s'effectue par contrôle du plateau cyclique, du pas collectif et/ou du basculement de chaque rotor. Ces mécanismes de contrôle passifs peuvent se cumuler pour répondre à plusieurs commandes simultanées, lors d'une translation comprenant des composantes longitudinale, latérale et verticale.

Ces contrôles sont de préférence spécifiques à un mode de vol dit vertical et un mode de vol dit intermédiaire, lorsque la vitesse de déplacement par rapport à l'air est comprise entre zéro et un deuxième seuil prédéterminé.

Avantageusement et selon l'invention, le module de commande active est configuré pour, lorsque la vitesse du drone par rapport à l'air est comprise entre un premier seuil prédéterminé et un deuxième seuil prédéterminé, un contrôle supplémentaire de translation verticale du drone par contrôle supplémentaire de chaque aileron de sorte à ce que la portance des ailerons à l'avant de l'axe de tangage du drone soit différente de la portance des ailerons à l'arrière de l'axe de tangage du drone.

Selon cet aspect de l'invention, ce contrôle est spécifique à un mode de vol dit intermédiaire, en présence de vent ou plus généralement lorsque la vitesse de déplacement par rapport à l'air est comprise entre un premier seuil prédéterminé et un deuxième seuil prédéterminé, durant lequel les voilures fixes et les ailerons ont un impact sur le contrôle du drone.

En particulier, les ailerons sont contrôlés pour modifier la portance de chaque voilure fixe de sorte à permettre une translation verticale du drone.

Avantageusement et selon l'invention, le module de correction passive comprend une centrale inertielle configuré pour fournir des informations représentatives de l'assiette et de l'inclinaison du drone, le module de correction passive étant configuré pour une commande en boucle fermée en fonction desdites informations représentatives de l'assiette et de l'inclinaison du drone.

Selon cet aspect de l'invention, la centrale inertielle permet de fournir en temps réel les informations nécessaires à la formation de la boucle fermée nécessaire pour maintenir le drone en position sensiblement horizontale, notamment en présence de vent pour éviter de présenter une surface face au vent.

Avantageusement et selon l'invention, le drone est configuré pour être commandé selon différents modes de vol parmi au moins les modes de vol la liste suivante :
- un mode de vol vertical dans lequel la vitesse du drone par rapport à l'air est inférieure à un premier seuil prédéterminé,
- un mode de vol intermédiaire dans lequel la vitesse du drone par rapport à l'air est comprise entre le premier seuil prédéterminé et un deuxième seuil prédéterminé, et/ou
- un mode de vol d'avancement dans lequel la vitesse du drone par rapport à l'air est supérieure au deuxième seuil prédéterminé.

Selon cet aspect de l'invention, ces différents modes de vol sont représentatifs de l'aspect hybride du drone, le mode de vol vertical s'apparentant au vol d'un aéronef à voilure tournante tel qu'un drone multirotor, le mode de vol d'avancement s'apparentant au vol d'un aéronef à voilure fixe tel qu'un avion, et le mode de vol intermédiaire permettant une transition fluide entre ces deux modes de vols. Le drone peut évoluer et être stabilisé à n'importe quelle vitesse par rapport à l'air entre une vitesse nulle et une vitesse maximale.

Avantageusement et selon l'invention, en mode de vol d'avancement, le module de commande active est configuré pour :
- un contrôle du basculement de chaque rotor de sorte à ce que l'axe de rotation des pales du rotor soit sensiblement parallèle à l'axe de roulis,
- un contrôle du tangage du drone par contrôle de chaque aileron de sorte à ce que la portance des ailerons à l'avant de l'axe de tangage du drone soit différente de la portance des ailerons à l'arrière de l'axe de tangage du drone,
- un contrôle du roulis du drone par contrôle de chaque aileron de sorte à ce que la portance des ailerons d'un côté de l'axe de roulis soit différente de la portance des ailerons de l'autre côté de l'axe de roulis,
- un contrôle du lacet du drone par contrôle du pas collectif de chaque rotor de sorte à ce que chaque rotor ait une portance moyenne différente d'un autre rotor agencé de l'autre côté de l'axe de roulis.

Selon cet aspect de l'invention, le contrôle du drone s'apparente à un vol d'un aéronef à voilure fixe tel qu'un avion à hélice, les rotors jouant le rôle de propulseur. Les ailerons permettent le contrôle du roulis et du tangage du drone du fait de la vitesse par rapport à l'air.

L'invention concerne également un procédé de contrôle de contrôle d'un drone hybride selon l'invention, caractérisé en ce que le procédé de contrôle comprend :
- au moins une étape de contrôle du plateau cyclique de chaque rotor,
- au moins une étape de contrôle du pas collectif de chaque rotor,
- au moins une étape de contrôle du basculement de chaque rotor selon son axe de basculement,
- au moins une étape de contrôle du braquage de chaque aileron.

L'invention concerne également un drone et un procédé de contrôle caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique en perspective d'un drone hybride selon un mode de réalisation de l'invention.
[Fig. 2] est une représentation schématique de dessus d'un drone hybride selon un mode de réalisation de l'invention.
[Fig. 3] est une représentation schématique en perspective d'un drone hybride selon un mode de réalisation de l'invention contrôlé en tangage durant un mode de vol vertical.
[Fig. 4] est une représentation schématique en perspective d'un drone hybride selon un mode de réalisation de l'invention contrôlé en roulis durant un mode de vol vertical.
[Fig. 5] est une représentation schématique en perspective d'un drone hybride selon un mode de réalisation de l'invention contrôlé en lacet durant un mode de vol vertical.
[Fig. 6] est une représentation schématique en perspective d'un drone hybride selon un mode de réalisation de l'invention contrôlé en translation longitudinale durant un mode de vol vertical.
[Fig. 7] est une représentation schématique en perspective d'un drone hybride selon un mode de réalisation de l'invention contrôlé en translation latérale durant un mode de vol vertical.
[Fig. 8] est une représentation schématique en perspective d'un drone hybride selon un mode de réalisation de l'invention contrôlé en translation verticale durant un mode de vol vertical.
[Fig. 9] est une représentation schématique en perspective d'un drone hybride selon un mode de réalisation de l'invention contrôlé en tangage durant un mode de vol intermédiaire.
[Fig. 10] est une représentation schématique en perspective d'un drone hybride selon un mode de réalisation de l'invention contrôlé en roulis durant un mode de vol intermédiaire.
[Fig. 11] est une représentation schématique en perspective d'un drone hybride selon un mode de réalisation de l'invention contrôlé en lacet durant un mode de vol intermédiaire.
[Fig. 12] est une représentation schématique en perspective d'un drone hybride selon un mode de réalisation de l'invention contrôlé en translation longitudinale durant un mode de vol intermédiaire.
[Fig. 13] est une représentation schématique en perspective d'un drone hybride selon un mode de réalisation de l'invention contrôlé en translation latérale durant un mode de vol intermédiaire.
[Fig. 14] est une représentation schématique en perspective d'un drone hybride selon un mode de réalisation de l'invention contrôlé en translation verticale durant un mode de vol intermédiaire.
[Fig. 15] est une représentation schématique en perspective d'un drone hybride selon un mode de réalisation de l'invention contrôlé en tangage durant un mode de vol d'avancement.
[Fig. 16] est une représentation schématique en perspective d'un drone hybride selon un mode de réalisation de l'invention contrôlé en roulis durant un mode de vol d'avancement.
[Fig. 17] est une représentation schématique en perspective d'un drone hybride selon un mode de réalisation de l'invention contrôlé en lacet durant un mode de vol d'avancement.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

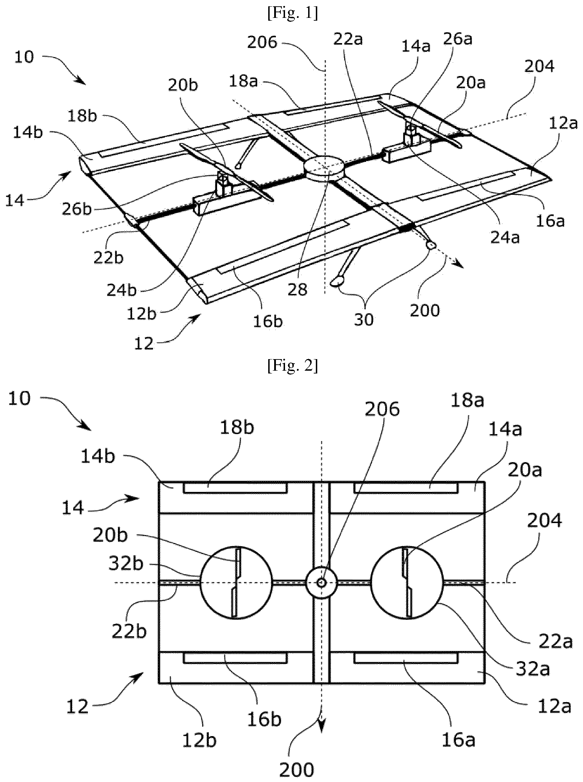

La figure 1 et la figure 2 représentent schématiquement en perspective et du dessus un drone 10 hybride à décollage et atterrissage vertical selon un mode de réalisation de l'invention.

Le drone est défini selon un repère classique d'un aéronef par un axe 200 de roulis, un axe 202 de tangage et un axe 204 de lacet, et les déplacements selon ces axes 200, 202, 204 sont appelés respectivement :
- déplacement longitudinal pour un déplacement vers l'avant (symbolisé par la flèche) ou vers l'arrière selon l'axe 200 de roulis,
- déplacement latéral pour un déplacement vers la gauche ou vers la droite selon l'axe 202 de tangage, et
- déplacement vertical pour un déplacement vers le haut ou vers le bas selon l'axe 204 de lacet.

Le plan formé par l'axe 200 de roulis et l'axe 204 de lacet délimite la gauche et la droite du drone. Le plan formé par l'axe 200 de roulis et l'axe 202 de tangage délimite le haut et le bas du drone. Le plan formé par l'axe 202 de tangage et l'axe 204 de lacet délimite l'avant et l'arrière du drone.

Le drone 10 hybride comprend au moins deux voilures fixes sensiblement parallèles, ici une première voilure 12 agencé vers l'avant du drone divisée en une première partie 12a à gauche du drone et une deuxième partie 12b à droite du drone, et une deuxième voilure 14 agencée vers l'arrière du drone divisée en une première partie 14a à gauche du drone et une deuxième partie 14b à droite du drone. Dans un autre mode de réalisation non représenté, chaque voilure peut ne pas être divisée et être formée d'un seul tenant.

Chaque voilure comprend au moins deux ailerons, un par partie de voilure, répartis de part et d'autre de l'axe 200 de roulis du drone et contrôlés individuellement : la première voilure 12 comprend un premier aileron 16a sur sa première partie 12a et un deuxième aileron 16b sur sa deuxième partie 12b, et la deuxième voilure 14 comprend un premier aileron 18a sur sa première partie 14a et un deuxième aileron 18b sur sa deuxième partie 14b.

Le drone hybride comprend également au moins deux rotors contre-rotatifs, ici un premier rotor 20a et un deuxième rotor 20b ayant des sens de rotation contraire, agencés entre les deux voilures 12, 14 de part et d'autre de l'axe 200 de roulis. Les deux rotors 20a, 20b sont contrôlés individuellement et articulés sur respectivement un premier arbre 22a de basculement et un deuxième arbre 22b de basculement de sorte à permettre un basculement indépendant de chaque rotor 20a, 20b selon un axe de basculement sensiblement parallèle à l'axe 202 de tangage du drone, ici confondu avec l'axe 202 de tangage. L'axe de rotation des pales de chaque rotor 20a,20b est sensiblement perpendiculaire à l'axe de basculement.

Chaque rotor est contrôlé selon un pas collectif et un plateau cyclique. Le premier rotor 20a comprend un premier pas 24a collectif permettant de modifier l'angle d'incidence de l'ensemble des pales de l'aéronef sur toute la rotation de chaque pale, et un premier plateau 26a cyclique permettant de modifier l'angle de l'incidence de chaque pale en fonction de sa position pendant sa rotation. Le deuxième rotor 20b comprend un deuxième pas 24b collectif et un deuxième plateau 26b pour les mêmes fonctions sur les pales du deuxième rotor 20b.

Le pas collectif et le plateau cyclique de chaque rotor 20a, 20b sont de fonctionnement analogue à ceux utilisés dans un hélicoptère.

Le contrôle des rotors 20a, 20b, des arbres 22a, 22b, des pas 24a, 24b collectifs, des plateaux 26a, 26b cycliques et des ailerons 16a, 16b, 18a, 18b est réalisé par un système 28 de contrôle, par exemple agencé au centre du drone 10 pour une meilleure stabilité du drone. Le système 28 de contrôle comprend un module de contrôle passif en boucle fermée contrôlant notamment le roulis, et le tangage du drone de sorte à maintenir en permanence une position horizontale dans au moins un mode de vol du drone. Le système 28 de contrôle comprend également un module de commande active en boucle ouverte permettant de fournir des commandes de déplacement en translation longitudinale, verticale ou latérale du drone.

Le drone peut comprendre des pieds 30 ou patins d'atterrissage, pour permettre la stabilité du drone lorsqu'il est posé au sol.

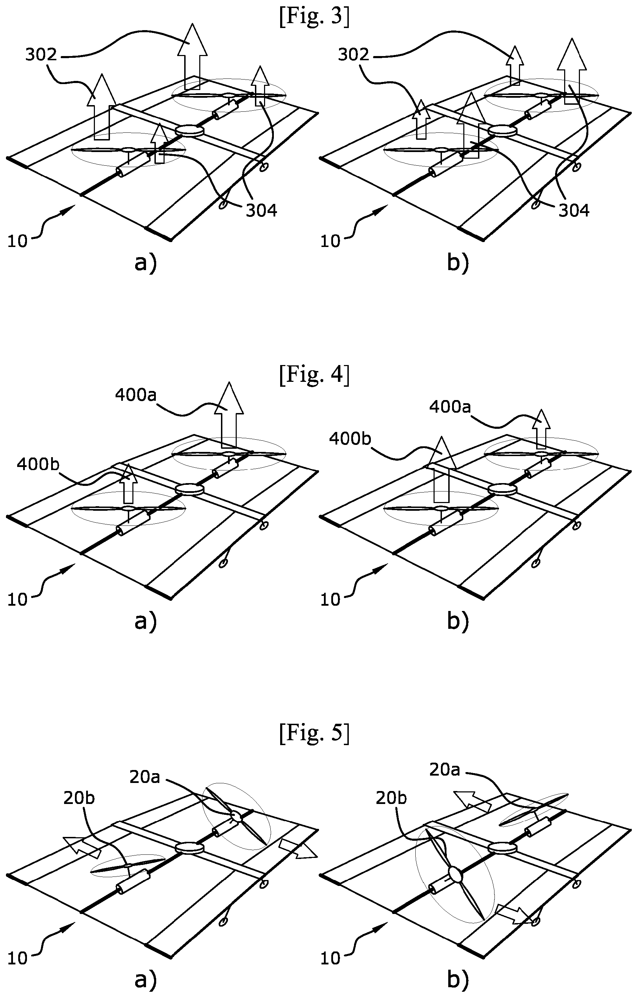

Comme visible sur la figure 2 et sur les figures 3 à 17 décrits plus bas, la rotation des pales peut être symbolisée par un disque de rotation, respectivement un premier disque 32a de rotation pour le premier rotor 20a et un deuxième disque 32b de rotation pour le deuxième rotor 20b. Sur les figures 3 à 17, la portance de chaque portion du rotor contrôlée par son pas collectif et son plateau cyclique sont symbolisés par des flèches de taille variable en fonction de l'intensité relative de la portance, représentées sur le disque de rotation de chaque rotor. Cette intensité de la portance est représentée uniquement à but illustratif pour schématiser la portance de façon simplifiée mais n'est pas liée à une échelle particulière de valeur de portance.

La figure 3, la figure 4 et la figure 5 représentent schématiquement en perspective un drone 10 hybride selon un mode de réalisation, contrôlé respectivement en tangage, en roulis et en lacet durant un mode de vol dit vertical, c'est-à-dire lorsque la vitesse du drone par rapport à l'air est inférieure à un premier seuil prédéterminé.

Le contrôle en tangage représenté figure 3 consiste en un contrôle du plateau cyclique de chaque rotor de sorte à ce que, pour chaque rotor, la portance 302 à l'arrière du rotor et la portance 304 à l'avant du rotor soit différente.

Pour une réduction d'assiette (un piqué) visible sur la partie a), la portance 302 arrière de chaque rotor est supérieure à la portance 304 avant de chaque rotor. Pour une augmentation d'assiette visible sur le schéma b), la portance 302 arrière de chaque rotor est inférieure à la portance 304 avant de chaque rotor.

Le contrôle en roulis représenté figure 4 consiste en un contrôle du pas collectif de chaque rotor de sorte à ce que chaque rotor ait une portance moyenne différente d'un autre rotor agencé de l'autre côté de l'axe de roulis.

Pour une inclinaison vers la droite visible sur la partie a), la portance 400a moyenne du premier rotor est supérieure à la portance 400b moyenne du deuxième rotor. Pour une inclinaison vers la gauche visible sur la partie b), la portance 400a moyenne du premier rotor est inférieure à la portance 400b moyenne du deuxième rotor.

Le contrôle en lacet représenté figure 5 consiste en un contrôle du basculement de chaque rotor de part et d'autre de l'axe de roulis dans des directions opposées.

Pour une rotation vers la droite visible sur la partie a), le premier rotor 20a est basculé vers l'avant et le deuxième rotor 20b est basculé vers l'arrière. Pour une rotation vers la gauche visible sur la partie b), le premier rotor 20a est basculé vers l'arrière et le deuxième rotor 20b est basculé vers l'avant.

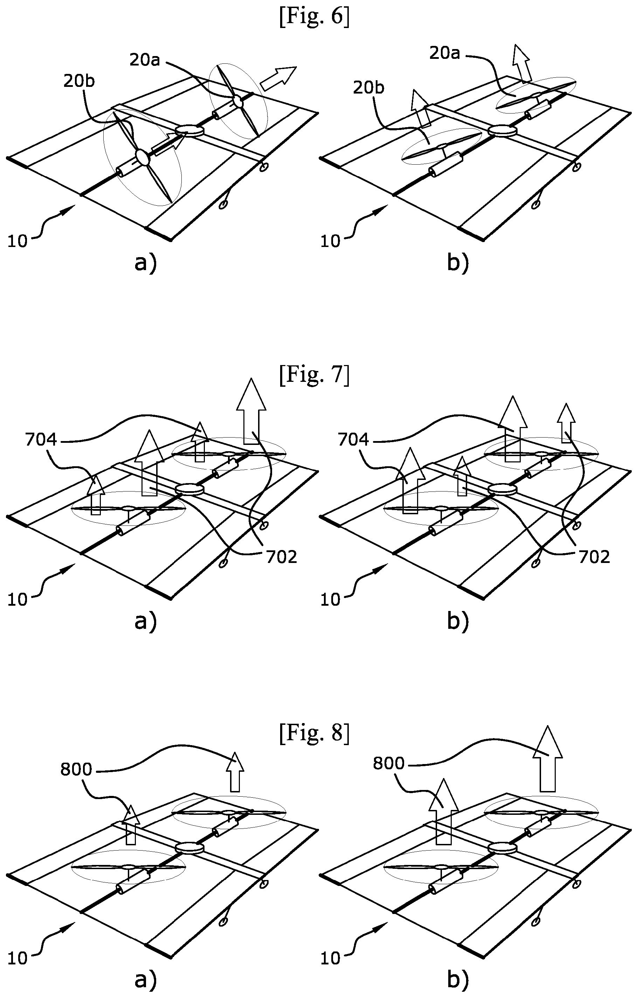

La figure 6, la figure 7 et la figure 8 représentent schématiquement en perspective un drone 10 hybride selon un mode de réalisation, contrôlé respectivement en translation longitudinale, translation latérale et translation verticale durant le mode de vol vertical.

Le contrôle en translation longitudinale représenté figure 6 consiste en un contrôle du basculement simultané de tous les rotors dans la même direction.

Pour une translation vers l'avant visible sur la partie a), les deux rotors 20a, 20b sont basculés vers l'avant. Pour une translation vers l'arrière visible sur la partie b), les deux rotors 20a, 20b sont basculés vers l'arrière.

Le contrôle en translation latérale représenté figure 7 consiste en un contrôle du plateau cyclique de chaque rotor de sorte à ce que, pour chaque rotor, la portance 702 à gauche du rotor et la portance 704 à droite du rotor soit différente.

Pour une translation vers la droite visible sur la partie a), les portances 702 à gauche des deux rotors sont supérieures aux portances 704 à droite des deux rotors. Pour une translation vers la gauche visible sur la partie b), les portances 702 à gauche des deux rotors sont inférieures aux portances 704 à droite des deux rotors.

Le contrôle en translation verticale représenté figure 8 consiste en un contrôle du pas collectif de chaque rotor de sorte à ce que tous les rotors aient la même portance 800.

Pour une translation vers le bas visible sur la partie a), les portances générées par les deux rotors sont identiques et inférieure au poids du drone, qui descend. Pour une translation vers le haut visible sur la partie b), les portances générées par les deux rotors sont identiques et supérieure au poids du drone, qui monte.

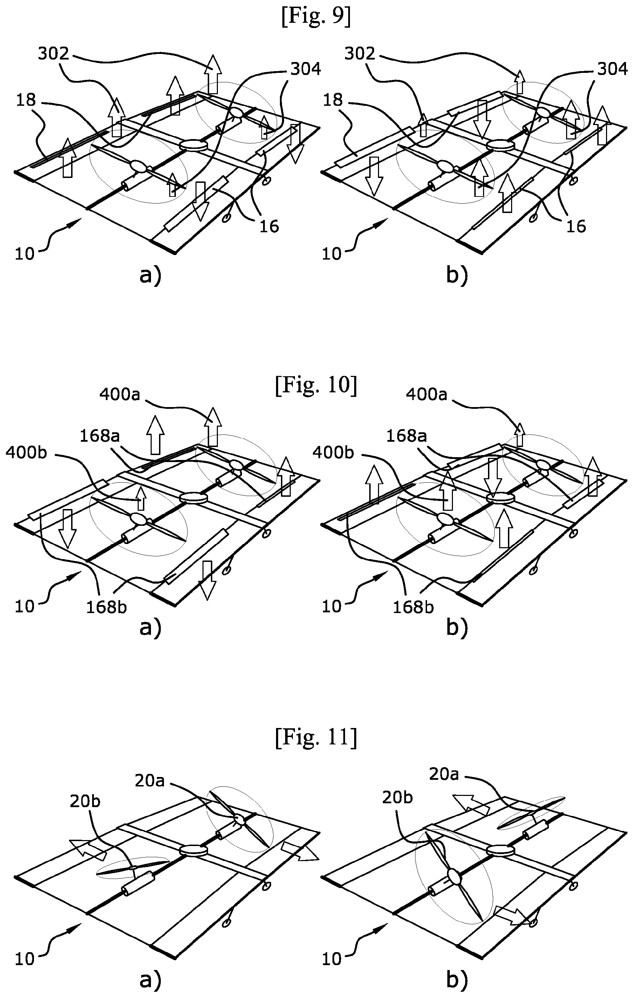

La figure 9, la figure 10 et la figure 11 représentent schématiquement en perspective un drone 10 hybride selon un mode de réalisation, contrôlé respectivement en tangage, en roulis et en lacet durant un mode de vol dit intermédiaire, c'est-à-dire lorsque la vitesse du drone par rapport à l'air est comprise entre le premier seuil prédéterminé et un deuxième seuil prédéterminé. Ce mode de vol permet notamment d'évoluer en présence de vent important.

Le contrôle en tangage représenté figure 9 consiste en un contrôle du plateau cyclique de chaque rotor de sorte à ce que, pour chaque rotor, la portance 302 à l'arrière du rotor et la portance 304 à l'avant du rotor soit différente, et un contrôle de chaque aileron de sorte à ce que la portance des ailerons 16 à l'avant de l'axe de tangage du drone soit différente de la portance des ailerons 18 à l'arrière de l'axe de tangage du drone.

Pour une réduction d'assiette (un piqué) visible sur la partie a), la portance 302 arrière de chaque rotor est supérieure à la portance 304 avant de chaque rotor, les ailerons 16 de la voilure avant sont inclinés vers le haut pour réduire la portance et les ailerons 18 de la voilure arrière sont inclinés vers le bas pour augmenter la portance. Pour une augmentation d'assiette visible sur le schéma b), la portance 302 arrière de chaque rotor est inférieure à la portance 304 avant de chaque rotor, les ailerons 16 de la voilure avant sont inclinés vers le bas pour augmenter la portance et les ailerons 18 de la voilure arrière sont inclinés vers le haut pour réduire la portance.

Le contrôle en roulis représenté figure 10 consiste en un contrôle du pas collectif de chaque rotor de sorte à ce que chaque rotor ait une portance moyenne différente d'un autre rotor agencé de l'autre côté de l'axe de roulis, et un contrôle de chaque aileron de sorte à ce que la portance des ailerons d'un côté de l'axe de roulis soit différente de la portance des ailerons de l'autre côté de l'axe de roulis.

Pour une inclinaison vers la droite visible sur la partie a), la portance 400a moyenne du premier rotor est supérieure à la portance moyenne 400b du deuxième rotor, les ailerons 168b situés à droite du drone sont inclinés vers le haut pour réduire la portance et les ailerons 168a à gauche du drone sont inclinés vers le bas pour augmenter la portance. Pour une inclinaison vers la gauche visible sur la partie b), la portance 400a moyenne du premier rotor est inférieure à la portance 400b moyenne du deuxième rotor, les ailerons 168b situés à droite du drone sont inclinés vers le bas pour augmenter la portance et les ailerons 168a à gauche du drone sont inclinés vers le haut pour réduire la portance.

Le contrôle en lacet représenté figure 11 consiste en un contrôle du basculement de chaque rotor de part et d'autre de l'axe de roulis dans des directions opposées.

Pour une rotation vers la droite visible sur la partie a), le premier rotor 20a est basculé vers l'avant et le deuxième rotor 20b est basculé vers l'arrière. Pour une rotation vers la gauche visible sur la partie b), le premier rotor 20a est basculé vers l'arrière et le deuxième rotor 20b est basculé vers l'avant.

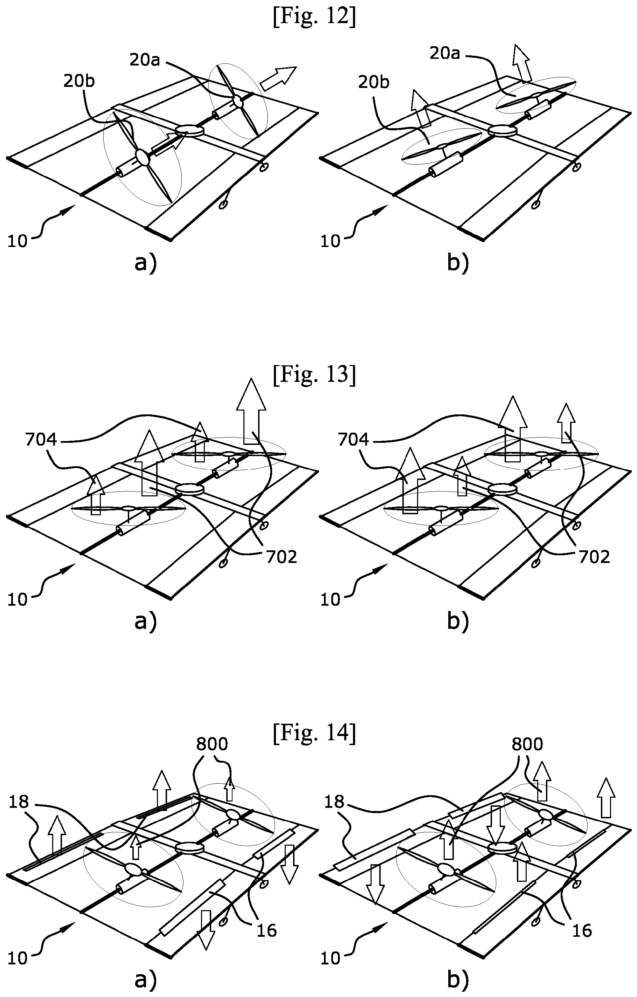

La figure 12, la figure 13 et la figure 14 représentent schématiquement en perspective un drone 10 hybride selon un mode de réalisation, contrôlé respectivement en translation longitudinale, translation latérale et translation verticale durant le mode de vol intermédiaire.

Le contrôle en translation longitudinale représenté figure 12 consiste en un contrôle du basculement simultané de tous les rotors dans la même direction.

Pour une translation vers l'avant visible sur la partie a), les deux rotors 20a, 20b sont basculés vers l'avant. Cette translation vers l'avant peut, en présence de vent, permettre un déplacement à vitesse positive par rapport à l'air mais une vitesse nulle par rapport au sol. Pour une translation vers l'arrière visible sur la partie b), les deux rotors 20a, 20b sont basculés vers l'arrière.

Le contrôle en translation latérale représenté figure 13 consiste en un contrôle du plateau cyclique de chaque rotor de sorte à ce que, pour chaque rotor, la portance à gauche du rotor et la portance à droite du rotor soit différente.

Pour une translation vers la droite visible sur la partie a), les portances 702 à gauche des deux rotors sont supérieures aux portances 704 à droite des deux rotors. Pour une translation vers la gauche visible sur la partie b), les portances 702 à gauche des deux rotors sont inférieures aux portances 704 à droite des deux rotors.

Le contrôle en translation verticale représenté figure 14 consiste en un contrôle du pas collectif de chaque rotor de sorte à ce que tous les rotors aient la même portance, et un contrôle de chaque aileron de sorte à ce que la portance des ailerons à l'avant de l'axe de tangage du drone soit différente de la portance des ailerons à l'arrière de l'axe de tangage du drone.

Pour une translation vers le bas visible sur la partie a), les portances 800 générées par les deux rotors sont identiques et inférieure au poids du drone, les ailerons 16 de la voilure avant sont inclinés vers le haut pour réduire la portance et les ailerons 18 de la voilure arrière sont inclinés vers le bas pour augmenter la portance, et le drone descend. Pour une translation vers le haut visible sur la partie b), les portances 800 générées par les deux rotors sont identiques et supérieure au poids du drone, les ailerons 16 de la voilure avant sont inclinés vers le bas pour augmenter la portance et les ailerons 18 de la voilure arrière sont inclinés vers le haut pour réduire la portance, et le drone monte.

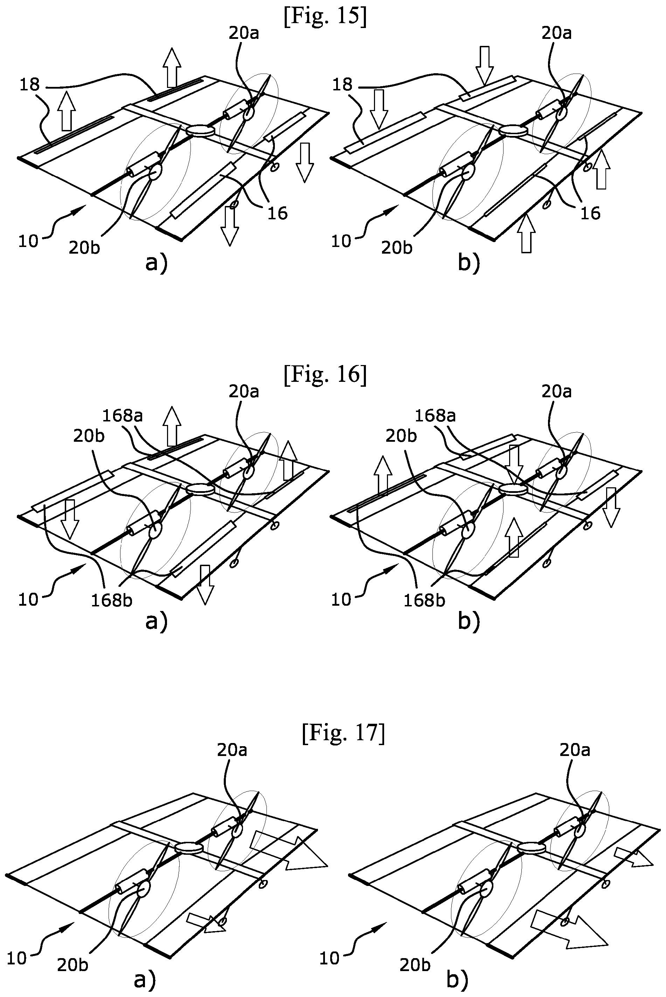

La figure 15, la figure 16 et la figure 17 représentent schématiquement en perspective un drone 10 hybride selon un mode de réalisation, contrôlé respectivement en tangage, en roulis et en lacet durant un mode de vol dit d'avancement, c'est-à-dire lorsque la vitesse du drone par rapport à l'air est supérieure au deuxième seuil prédéterminé. Ce mode de vol s'apparente à un vol d'un aéronef à voilure fixe tel qu'un avion. Dans ce mode de vol, le drone est configuré pour un contrôle du basculement de chaque rotor de sorte à ce que l'axe de rotation des pales du rotor soit sensiblement parallèle à l'axe de roulis, les rotors 20a, 20b formant ainsi des propulseurs du drone.

Le contrôle en tangage représenté figure 15 consiste en un contrôle de chaque aileron de sorte à ce que la portance des ailerons 16 à l'avant de l'axe de tangage du drone soit différente de la portance des ailerons 18 à l'arrière de l'axe de tangage du drone.

Pour une réduction d'assiette (un piqué) visible sur la partie a), les ailerons 16 de la voilure avant sont inclinés vers le haut pour réduire la portance et les ailerons 18 de la voilure arrière sont inclinés vers le bas pour augmenter la portance. Pour une augmentation d'assiette visible sur le schéma b), les ailerons 16 de la voilure avant sont inclinés vers le bas pour augmenter la portance et les ailerons 18 de la voilure arrière sont inclinés vers le haut pour réduire la portance.

Le contrôle en roulis représenté figure 16 consiste en un contrôle de chaque aileron de sorte à ce que la portance des ailerons d'un côté de l'axe de roulis soit différente de la portance des ailerons de l'autre côté de l'axe de roulis.

Pour une inclinaison vers la droite visible sur la partie a), les ailerons 168b situés à droite du drone sont inclinés vers le haut pour réduire la portance et les ailerons 168a à gauche du drone sont inclinés vers le bas pour augmenter la portance. Pour une inclinaison vers la gauche visible sur la partie b), les ailerons 168b situés à droite du drone sont inclinés vers le bas pour augmenter la portance et les ailerons 168a à gauche du drone sont inclinés vers le haut pour réduire la portance.

Le contrôle en lacet représenté figure 17 consiste en un contrôle du pas collectif de chaque rotor de sorte à ce que chaque rotor ait une portance moyenne différente d'un autre rotor agencé de l'autre côté de l'axe de roulis.

Pour une rotation vers la droite visible sur la partie a), la portance moyenne du premier rotor 20a est supérieure à la portance moyenne du deuxième rotor 20b. Pour une rotation vers la gauche visible sur la partie b), la portance moyenne du premier rotor 20a est inférieure à la portance moyenne du deuxième rotor 20b.

## Revendications

1. Drone hybride à décollage et atterrissage vertical comprenant au moins deux voilures (12, 14) fixes sensiblement parallèles comprenant chacune au moins deux ailerons (16a, 16b, 18a, 18b) répartis de part et d'autre d'un axe (200) de roulis du drone et contrôlés individuellement, et qui comprend au moins deux rotors (20a, 20b) contre-rotatifs à pas (24a, 24b) collectif et à plateau (26a, 26b) cyclique agencés entre lesdites au moins deux voilures (12, 14) de part et d'autre de l'axe (200) de roulis, contrôlés individuellement et articulés de sorte à permettre un basculement indépendant de chaque rotor selon un axe (22a, 22b) de basculement sensiblement parallèle à l'axe de tangage du drone, l'axe de rotation des pales de chaque rotor étant sensiblement perpendiculaire audit axe (22a, 22b) de basculement.

2. Drone hybride selon la revendication 1, qui comprend un système (28) de contrôle de chaque aileron (16a, 16b, 18a, 18b) et de chaque rotor (20a, 20b) indépendamment, comprenant :
- un module de commande active des déplacements configuré pour commander chaque aileron et/ou chaque rotor en fonction d'une commande de vol,
- un module de correction passive d'assiette et d'inclinaison configuré pour, dans au moins un mode de vol du drone, commander chaque aileron et/ou chaque rotors de façon à conserver une assiette et une inclinaison sensiblement nulle du drone.

3. Drone hybride selon la revendication 2, dans lequel le module de correction passive est configuré pour commander chaque aileron (16a, 16b) et/ou chaque rotor (20a, 20b) de façon à ce que l'axe de roulis du drone soit sensiblement parallèle à la direction du vent.

4. Drone hybride selon l'une des revendications 2 à 3, dans lequel le module de correction passive est configuré pour, dans au moins un mode de vol du drone :
- un contrôle du tangage du drone par contrôle du plateau (26a, 26b) cyclique de chaque rotor de sorte à ce que, pour chaque rotor, la portance à l'arrière du rotor et la portance à l'avant du rotor soit différente,
- un contrôle du roulis du drone par contrôle du pas (24a, 24b) collectif de chaque rotor de sorte à ce que chaque rotor ait une portance moyenne différente d'un autre rotor agencé de l'autre côté de l'axe (200) de roulis,
- un contrôle du lacet du drone par contrôle du basculement de chaque rotor de part et d'autre de l'axe (200) de roulis dans des directions opposées.

5. Drone hybride selon la revendication 4, dans lequel le module de correction passive est configuré pour, lorsque la vitesse du drone par rapport à l'air est comprise entre un premier seuil prédéterminé et un deuxième seuil prédéterminé, les contrôles supplémentaires suivant :
- un contrôle supplémentaire du tangage du drone par contrôle de chaque aileron (16a, 16b, 18a, 18b) de sorte à ce que la portance des ailerons à l'avant de l'axe de tangage du drone soit différente de la portance des ailerons à l'arrière de l'axe de tangage du drone,
- un contrôle supplémentaire du roulis du drone par contrôle de chaque aileron (16a, 16b, 18a, 18b) de sorte à ce que la portance des ailerons d'un côté de l'axe de roulis soit différente de la portance des ailerons de l'autre côté de l'axe de roulis.

6. Drone hybride selon l'une des revendications 2 à 5, dans lequel le module de commande active est configuré pour, dans au moins un mode de vol du drone :
- un contrôle de translation longitudinal du drone par contrôle du basculement simultané de tous les rotors (20a, 20b) dans la même direction,
- un contrôle de translation latérale du drone par contrôle du plateau (26a, 26b) cyclique de chaque rotor de sorte à ce que, pour chaque rotor, la portance à gauche du rotor et la portance à droite du rotor soit différente,
- un contrôle de translation verticale du drone par contrôle du pas (24a, 24b) collectif de chaque rotor de sorte à ce que tous les rotors aient la même portance.

7. Drone hybride selon la revendication 6, dans lequel le module de commande active est configuré pour, lorsque la vitesse du drone par rapport à l'air est comprise entre un premier seuil prédéterminé et un deuxième seuil prédéterminé, un contrôle supplémentaire de translation verticale du drone par contrôle supplémentaire de chaque aileron (16a, 16b, 18a, 18b) de sorte à ce que la portance des ailerons à l'avant de l'axe de tangage du drone soit différente de la portance des ailerons à l'arrière de l'axe de tangage du drone.

8. Drone hybride selon l'une des revendications 2 à 7, dans lequel le module de correction passive comprend une centrale inertielle configuré pour fournir des informations représentatives de l'assiette et de l'inclinaison du drone, le module de correction passive étant configuré pour une commande en boucle fermée en fonction desdites informations représentatives de l'assiette et de l'inclinaison du drone.

9. Drone hybride selon l'une des revendications 1 à 8, qui est configuré pour être commandé selon différents modes de vol parmi au moins les modes de vol la liste suivante :
- un mode de vol vertical dans lequel la vitesse du drone par rapport à l'air est inférieure à un premier seuil prédéterminé,
- un mode de vol intermédiaire dans lequel la vitesse du drone par rapport à l'air est comprise entre le premier seuil prédéterminé et un deuxième seuil prédéterminé, et/ou
- un mode de vol d'avancement dans lequel la vitesse du drone par rapport à l'air est supérieure au deuxième seuil prédéterminé.

10. Drone hybride selon la revendication 9, dans lequel, en mode de vol d'avancement, le module de commande active est configuré pour :
- un contrôle du basculement de chaque rotor (20a, 20b) de sorte à ce que l'axe de rotation des pales du rotor soit sensiblement parallèle à l'axe de roulis,
- un contrôle du tangage du drone par contrôle de chaque aileron (16a, 16b, 18a, 18b) de sorte à ce que la portance des ailerons à l'avant de l'axe de tangage du drone soit différente de la portance des ailerons à l'arrière de l'axe de tangage du drone,
- un contrôle du roulis du drone par contrôle de chaque aileron (16a, 16b, 18a, 18b) de sorte à ce que la portance des ailerons d'un côté de l'axe de roulis soit différente de la portance des ailerons de l'autre côté de l'axe de roulis,
- un contrôle du lacet du drone par contrôle du pas (24a, 24b) collectif de chaque rotor de sorte à ce que chaque rotor ait une portance moyenne différente d'un autre rotor agencé de l'autre côté de l'axe de roulis.

11. Procédé de contrôle d'un drone hybride selon l'une des revendications 1 à 10, **caractérisé en ce que** le procédé de contrôle comprend :
- au moins une étape de contrôle du plateau (26a, 26b) cyclique de chaque rotor,
- au moins une étape de contrôle du pas (24a, 24b) collectif de chaque rotor,
- au moins une étape de contrôle du basculement de chaque rotor (20a, 20b) selon son axe (22a, 22b) de basculement,
- au moins une étape de contrôle du braquage de chaque aileron (16a, 16b, 18a, 18b).

## Patentansprüche

1. Hybride Senkrechtstart- und landedrohne mit mindestens zwei im Wesentlichen parallelen festen Flügeln (12, 14), die jeweils mindestens zwei Flossen (16a, 16b, 18a, 18b) aufweisen, die auf beiden Seiten einer Rollachse (200) der Drohne verteilt sind und einzeln gesteuert werden, und die mindestens zwei gegenläufige Rotoren (20a, 20b) mit einem kollektiven Pitchsystem (24a, 24b) und einer Taumelscheibe (26a, 26b) umfasst, die zwischen den mindestens zwei Flügeln (12, 14) beiderseits der Rollachse (200) angeordnet sind, die einzeln gesteuert werden und so angelenkt sind, ein unabhängiges Kippen jedes Rotors um eine Kippachse (22a, 22b) zu ermöglichen, die im Wesentlichen parallel zur Nickachse der Drohne verläuft, worin die Drehachse der Blätter jedes Rotors im Wesentlichen senkrecht zur Kippachse (22a, 22b) verläuft.

2. Hybriddrohne nach Anspruch 1, welche ein System (28) zur unabhängigen Steuerung jeder Flosse (16a, 16b, 18a, 18b) und jedes Rotors (20a, 20b) umfasst, welches umfasst:
- ein Modul zur aktiven Steuerung von Bewegungen, das ausgestaltet ist, jede Flosse und/oder jeden Rotor auf der Grundlage einer Flugsteuerung zu steuern,
- ein Modul zur passiven Korrektur von Lage und Neigung, das ausgestaltet ist, in mindestens einem Flugmodus der Drohne jede Flosse und/oder jeden Rotor so zu steuern, dass eine Neigung von im Wesentlichen Null und eine Lage der Drohne beibehalten wird.

3. Hybriddrohne nach Anspruch 2, worin das passive Korrekturmodul ausgestaltet ist, jede Flosse (16a, 16b) und/oder jeden Rotor (20a, 20b) so zu steuern, dass die Rollachse der Drohne im Wesentlichen parallel zur Richtung des Windes verläuft.

4. Hybriddrohne nach einem der Ansprüche 2 bis 3, worin das passive Korrekturmodul ausgestaltet ist, in mindestens einem Flugmodus der Drohne, zum:
- Steuern des Nickens der Drohne durch Steuern der Taumelscheibe (26a, 26b) jedes Rotors, so dass für jeden Rotor der Auftrieb hinter dem Rotor und der Auftrieb vor dem Rotor unterschiedlich sind,
- Steuern des Rollens der Drohne durch Steuern des kollektiven Pitchsystems (24a, 24b) jedes Rotors, so dass jeder Rotor einen durchschnittlichen Auftrieb hat, der sich von dem eines anderen Rotors unterscheidet, der auf der anderen Seite der Rollachse (200) angeordnet ist, und
- Steuern des Gierens der Drohne durch Steuern der Neigung jedes Rotors auf beiden Seiten der Rollachse (200) in entgegengesetzten Richtungen.

5. Hybriddrohne nach Anspruch 4, worin das passive Korrekturmodul ausgestaltet ist, wenn die Luftgeschwindigkeit der Drohne zwischen einem ersten bestimmten Schwellenwert und einem zweiten bestimmten Schwellenwert liegt, die folgenden zusätzlichen Steuerungen vorzunehmen:
- zusätzliches Steuern des Nickens der Drohne durch Steuern jeder Flosse (16a, 16b, 18a, 18b), so dass der Auftrieb der Flossen vor der Nickachse der Drohne anders ist als der Auftrieb der Flossen hinter der Nickachse der Drohne,
- zusätzliches Steuern des Rollens der Drohne durch Steuern jeder Flosse (16a, 16b, 18a, 18b), so dass der Auftrieb der Flossen auf einer Seite der Rollachse sich von dem Auftrieb der Flossen auf der anderen Seite der Rollachse unterscheidet.

6. Hybriddrohne nach einem der Ansprüche 2 bis 5, worin das aktive Steuermodul ausgestaltet ist, in mindestens einem Flugmodus der Drohne, zum:
- Steuern der Längsversetzung der Drohne durch Steuern des gleichzeitigen Kippens aller Rotoren (20a, 20b) in dieselbe Richtung,
- Steuerung der Querversetzung der Drohne durch Steuerung der Taumelscheibe (26a, 26b) jedes Rotors, so dass für jeden Rotor der Auftrieb auf der linken Seite des Rotors und der Auftrieb auf der rechten Seite des Rotors unterschiedlich ist,
- Steuerung der Vertikalversetzung der Drohne durch Steuerung des kollektiven Pitchsystems (24a, 24b) jedes Rotors, so dass alle Rotoren den gleichen Auftrieb haben.

7. Hybriddrohne nach Anspruch 6, worin das aktive Steuermodul ausgestaltet ist, wenn die Luftgeschwindigkeit der Drohne zwischen einem ersten bestimmten Schwellenwert und einem zweiten bestimmten Schwellenwert liegt, zusätzlich die Vertikalversetzung der Drohne zu steuern, indem es zusätzlich jede Flosse (16a, 16b, 18a, 18b) so steuert, dass der Auftrieb der Flossen vor der Nickachse der Drohne von dem Auftrieb der Flossen hinter der Nickachse der Drohne verschieden ist.

8. Hybriddrohne nach einem der Ansprüche 2 bis 7, worin das passive Korrekturmodul eine Trägheitseinheit umfasst, die ausgestaltet ist, Informationen zu liefern, die die Lage und Neigung der Drohne darstellen, worin das passive Korrekturmodul für eine Regelung auf der Grundlage der Informationen ausgestaltet ist, die die Lage und Neigung der Drohne darstellen.

9. Hybriddrohne nach einem der Ansprüche 1 bis 8, die ausgestaltet ist, in verschiedenen Flugmodi aus mindestens der folgenden Liste von Flugmodi gesteuert zu werden:
- einem Vertikalflugmodus, in dem die Fluggeschwindigkeit der Drohne kleiner als ein erster bestimmter Schwellenwert ist,
- einem Zwischenflugmodus, in dem die Fluggeschwindigkeit der Drohne zwischen dem ersten bestimmten Schwellenwert und einem zweiten bestimmten Schwellenwert liegt, und/oder
- einem Vorwärtsflugmodus, in dem die Fluggeschwindigkeit der Drohne größer als der zweite bestimmten Schwellenwert ist.

10. Hybriddrohne nach Anspruch 9, worin im Vorwärtsflugmodus das aktive Steuermodul ausgestaltet ist, zum:
- Steuern der Neigung jedes Rotors (20a, 20b), so dass die Drehachse der Blätter des Rotors im Wesentlichen parallel zur Rollachse verläuft,
- Steuern der Neigung der Drohne durch Steuern jeder Flosse (16a, 16b, 18a, 18b), so dass der Auftrieb der Flossen vor der Nickachse der Drohne anders ist als der Auftrieb der Flossen hinter der Nickachse der Drohne,
- Steuern des Rollens der Drohne durch Steuern jeder Flosse (16a, 16b, 18a, 18b), so dass der Auftrieb der Flossen auf einer Seite der Rollachse und der Auftrieb der Flossen auf der anderen Seite der Rollachse verschieden sind,
- Steuern des Gierens der Drohne durch Steuern des kollektiven Pitchsystems (24a, 24b) jedes Rotors, so dass jeder Rotor einen durchschnittlichen Auftrieb hat, der sich von dem eines anderen Rotors unterscheidet, der auf der anderen Seite der Rollachse angeordnet ist.

11. Verfahren zur Steuerung einer Hybriddrohne nach einem der Ansprüche 1 bis 10, **dadurch gekennzeichnet, dass** das Steuerungsverfahren umfasst:
- mindestens einen Schritt der Steuerung der Taumelscheibe (26a, 26b) jedes Rotors,
- mindestens einen Schritt zur Steuerung des kollektiven Pitchsystems (24a, 24b) jedes Rotors,
- mindestens einen Schritt der Steuerung des Kippens jedes Rotors (20a, 20b) um seine Kippachse (22a, 22b), und
- mindestens einen Schritt zur Steuerung der Auslenkung jeder Flosse (16a, 16b, 18a, 18b).

## Claims

1. Hybrid vertical take-off and landing drone comprising at least two substantially parallel fixed wings (12, 14) each comprising at least two fins (16a, 16b, 18a, 18b) distributed on either side of a roll axis (200) of the drone and individually controlled, and that comprises at least two counter-rotating rotors (20a, 20b) with a collective pitch system (24a, 24b) and a swashplate (26a, 26b), which are arranged between said at least two wings (12, 14) on either side of the roll axis (200), individually controlled and articulated so as to allow independent tilting of each rotor on a tilt axis (22a, 22b) substantially parallel to the pitch axis of the drone, the rotational axis of the blades of each rotor being substantially perpendicular to said tilt axis (22a, 22b).

2. Hybrid drone as claimed in claim 1, comprising a system (28) for controlling each fin (16a, 16b, 18a, 18b) and each rotor (20a, 20b) independently, comprising:
- a module for the active control of movements, configured to control each fin and/or each rotor based on a flight control,
- a module for the passive correction of attitude and inclination, configured to, in at least one flight mode of the drone, control each fin and/or each rotor so as to maintain a substantially zero inclination and an attitude of the drone.

3. Hybrid drone as claimed in claim 2, wherein the passive correction module is configured to control each fin (16a, 16b) and/or each rotor (20a, 20b) such that the roll axis of the drone is substantially parallel to the direction of the wind.

4. Hybrid drone as claimed in any one of claims 2 to 3, wherein the passive correction module is configured for, in at least one flight mode of the drone:
- controlling the pitch of the drone by controlling the swashplate (26a, 26b) of each rotor such that, for each rotor, the lift behind the rotor and the lift in front of the rotor are different,
- controlling the roll of the drone by controlling the collective pitch system (24a, 24b) of each rotor such that each rotor has an average lift different from another rotor arranged on the other side of the roll axis (200),
- controlling the yaw of the drone by controlling the tilt of each rotor on either side of the roll axis (200) in opposite directions.

5. Hybrid drone as claimed in claim 4, wherein the passive correction module is configured for, when the air speed of the drone is between a first predetermined threshold and a second predetermined threshold, the following additional controls:
- additionally controlling the pitch of the drone by controlling each fin (16a, 16b, 18a, 18b) such that the lift of the fins in front of the pitch axis of the drone is different from the lift of the fins behind the pitch axis of the drone,
- additionally controlling the roll of the drone by controlling each fin (16a, 16b, 18a, 18b) such that the lift of the fins on one side of the roll axis is different from the lift of the fins on the other side of the roll axis.

6. Hybrid drone as claimed in any one of claims 2 to 5, wherein the active control module is configured for, in at least one flight mode of the drone:
- controlling the longitudinal translation of the drone by controlling the simultaneous tilting of all of the rotors (20a, 20b) in the same direction,
- controlling the lateral translation of the drone by controlling the swashplate (26a, 26b) of each rotor such that, for each rotor, the lift on the left of the rotor and the lift on the right of the rotor are different,
- controlling the vertical translation of the drone by controlling the collective pitch system (24a, 24b) of each rotor such that all of the rotors have the same lift.

7. Hybrid drone as claimed in claim 6, wherein the active control module is configured for, when the air speed of the drone is between a first predetermined threshold and a second predetermined threshold, additionally controlling the vertical translation of the drone by additionally controlling each fin (16a, 16b, 18a, 18b) such that the lift of the fins in front of the pitch axis of the drone is different from the lift of the fins behind the pitch axis of the drone.

8. Hybrid drone as claimed in any one of claims 2 to 7, wherein the passive correction module comprises an inertial unit configured to provide information representing the attitude and inclination of the drone, the passive correction module being configured for closed-loop control based on said information representing the attitude and inclination of the drone.

9. Hybrid drone as claimed in any one of claims 1 to 8, configured to be controlled in different flight modes from at least the following list of flight modes:
- a vertical flight mode in which the air speed of the drone is less than a first predetermined threshold,
- an intermediate flight mode in which the air speed of the drone is between the first predetermined threshold and a second predetermined threshold, and/or
- a forward flight mode in which the air speed of the drone is greater than the second predetermined threshold.

10. Hybrid drone as claimed in claim 9, wherein in the forward flight mode, the active control module is configured for:
- controlling the tilting of each rotor (20a, 20b) such that the rotational axis of the blades of the rotor is substantially parallel to the roll axis,
- controlling the pitch of the drone by controlling each fin (16a, 16b, 18a, 18b) such that the lift of the fins in front of the pitch axis of the drone is different from the lift of the fins behind the pitch axis of the drone,
- controlling the roll of the drone by controlling each fin (16a, 16b, 18a, 18b) such that the lift of the fins on one side of the roll axis is different from the lift of the fins on the other side of the roll axis,
- controlling the yaw of the drone by controlling the collective pitch system (24a, 24b) of each rotor such that each rotor has an average lift different from another rotor arranged on the other side of the roll axis.

11. Method for controlling a hybrid drone as claimed in any one of claims 1 to 10, **characterized in that** the control method comprises:
- at least one step of controlling the swashplate (26a, 26b) of each rotor,
- at least one step of controlling the collective pitch system (24a, 24b) of each rotor,
- at least one step of controlling the tilting of each rotor (20a, 20b) on its tilt axis (22a, 22b),
- at least one step of controlling the deflection of each fin (16a, 16b, 18a, 18b).
